# NEUE EUROPÄISCHE PATENTSCHRIFT

(11) **EP 1 490 295 B2**
(45) Veröffentlichungstag und Bekanntmachung des Hinweises auf die Entscheidung über den Einspruch: **04.11.2009**
(45) Hinweis auf die Patenterteilung: 03.08.2005
(21) Anmeldenummer: 03709810.0
(22) Anmeldetag: 22.03.2003
(51) Int. Cl.: C01B 3/52, F25J 3/02

(54) **ANLAGENTEIL UND VERFAHREN ZUR ZERLEGUNG UND REINIGUNG VON SYNTHESEGAS**
PLANT UNIT AND METHOD FOR DECOMPOSING AND PURIFYING SYNTHESIS GAS
INSTALLATION ET PROCEDE POUR LA DECOMPOSITION ET LA PURIFICATION DE GAZ DE SYNTHESE

(30) Priorität: 13.06.2002 DE 10226210
(43) Veröffentlichungstag der Anmeldung: 29.12.2004
(73) Patentinhaber: Lurgi GmbH, 60295 Frankfurt am Main (DE)
(72) Erfinder: DAVEY, William, 60439 Frankfurt am Main (DE); WURZEL, Thomas Dr., 61440 Oberursel/Ts. (DE)
(74) Vertreter: Meyer-Dulheuer, Karl-Hermann
(86) Internationale Anmeldenummer: PCT/EP2003/003010
(87) Internationale Veröffentlichungsnummer: WO 2003/106331

(56) Entgegenhaltungen:
- GB-A- 1 554 948
- US-A- 3 872 025
- US-A1- 2001 006 615

## Beschreibung

Gegenstand der Erfindung ist ein Anlagenteil und ein Verfahren zur Zerlegung und Reinigung von Synthesegas, mit dem es möglich wird, zwei Verfahrensschritte in einem einzigen Anlagenteil durchzuführen. Insbesondere werden die partielle Kondensation von Synthesegas und die Wäsche des Synthesegases mit flüssigem Stickstoff einem einzigen Anlagenteil durchgeführt und dabei mehrere gereinigte, für weitere chemische Synthesen direkt einsetzbare Gase oder Gasgemische gewonnen.

Es ist bekannt, zur Zerlegung und Reinigung von Synthesegasen Produktionsanlagen zu verwenden, in denen in der Regel jeweils nur ein Bestandteil des durch partielle Oxidation von Erdgas gewonnenen Synthesegases abgetrennt werden kann. Bei diesen bekannten Verfahren wird Kohlenstoffmonoxid kältetechnisch in einer Anlageneinheit abgetrennt, die als Vorrichtung zur partiellen Gaskondensation bekannt ist (1). Kältetechnisch wird auch das zur Ammoniakherstellung benötigte Synthesegas gewonnen, wobei eine Anlageneinheit eingesetzt wird, die als "Stickstoff-Wäsche" (1) bekannt ist. Beide Anlageneinheiten sind völlig unterschiedlich gestaltet. Gemeinsam ist beiden kältetechnischen Verfahren nur die Verwendung eines Vielweg-Plattenwärmeaustauschers zum Abkühlen und auch zum Wiedererwärmen der Gasströme. Jedes dieser Verfahren erfordert eine Kühlvorrichtung, was in einer partiellen Kondensationseinheit im allgemeinen durch Expansion von Kohlenmonoxid oder Wasserstoff erreicht werden kann, während eine Einheit zur Stickstoff-Wäsche flüssigen Stickstoff benötigt.

In der vorliegenden Erfindung werden zwei Reinigungsschritte in einem einzigen Verfahren miteinander kombiniert, wobei das rohe Synthesegas auf kryogene Temperaturen abgekühlt wird, bei denen das Kohlenmonoxid aus dem Synthesegas abgetrennt werden kann. Der zurückbleibende Wasserstoff wird in einer Stickstoff-Waschkolonne gereinigt und kann dann gegebenenfalls mit weiterem Stickstoff vermischt zur Ammoniaksynthese eingesetzt werden.

Die Vorteile des erfindungsgemäßen Anlagenteils gegenüber dem bisherigen Stand der Technik sind vor allem darin zu sehen, dass
a) ein viel effzienterer Wärmeaustausch in den Platten-Wärmeaustauschem erfolgt;
b) ein besonderes Kühlsystem in Form eines Expanders für die Reinigung des Kohlenmonoxids nicht benötigt wird, wodurch sich die Betriebssicherheit des gesamten Systems verbessert;
c) die Zuverlässigkeit der Gasversorgung dadurch verbessert wird, dass im Falle eines verringerten Bedarfs von entweder Kohlenmonoxid oder von Ammoniaksynthesegas das erfindungsgemäße Anlagenteil durch die fortgeführte Reinigung des anderen Synthesegases kühl gehalten und sehr schnell wieder auf volle Produktion beider Synthesegase gebracht werden kann;
d) das erfindungsgemäße Anlagenteil kostengünstiger errichtet werden kann als zwei separate kryogene Systeme.

Gegenstand der Erfindung ist somit ein Anlagenteil zur Zerlegung und Reinigung von Synthesegas, welches aus einer Vorrichtung zur partiellen Kondensation von Synthesegas und aus einer Vorrichtung zur Stickstoff-Wäsche besteht, wobei sich die Vorrichtung zur Stickstoff-Wäsche an die Vorrichtung zur partiellen Kondensation anschließt.

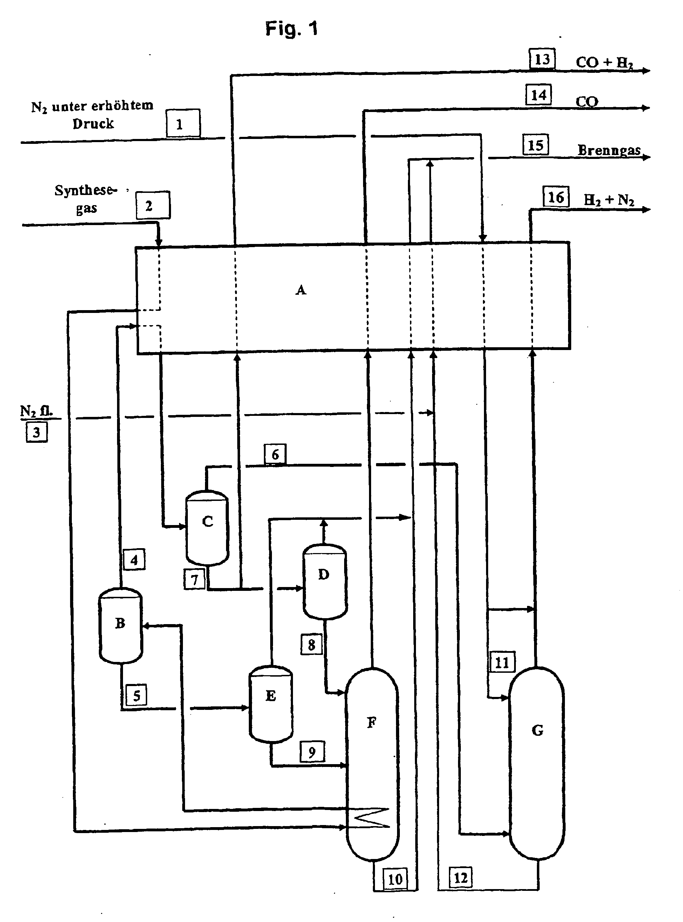

Das erfindungsgemäße Anlagenteil ist in Fig. 1 schematisch dargestellt. Die Zusammensetzung der eingezeichneten Stoffströme ist der Tabelle I zu entnehmen.

Das erfindungsgemäße Anlagenteil weist die folgenden miteinander verbundenen Vorrichtungen auf:
- einen Wärmeaustauscher A zur Abkühlung des dem Anlagenteil zugeführten Synthesegases;
- einen mit dem Wärmeaustauscher A verbundenen Abscheider B zur Auftrennung des Synthesegases 2 in eine Gasfraktion 4, bestehend im Wesentlichen aus Wasserstoff und Kohlenmonoxid, und in eine Flüssigfraktion, bestehend im Wesentlichen aus Kohlenmonoxid und Methan;
- einen Abscheider C zur weiteren Auftrennung der aus dem Abscheider B zugeleiteten Gasfraktion 4 in eine überwiegend aus Wasserstoff bestehende Gasfraktion 6 und eine überwiegend aus Kohlenmonoxid bestehende Flüssigkeit 7;
- einen Verdampfer D, in dem der in der Flüssigkeit 7 absorbierte Wasserstoff verdampft und die verbleibende, im Wesentlichen Kohlenmonoxid enthaltende Flüssigkeit 8 in eine Destillationskolonne F geleitet werden kann;
- einen weiteren Verdampfer E, in dem der in der Flüssigkeitsfraktion 5 des Abscheiders B noch absorbierte Wasserstoff durch Verdampfen entfernt und die im Wesentlichen Kohlenmonoxid und Methan enthaltende Flüssigkeit 9 in die Destillationskolonne F eingespeist werden kann;
- eine Destillationskolonne F zur Abtrennung von gasförmigen Kohlenmonoxid und zur Gewinnung von Methan aus der sich am Boden der Kolonne abscheidende Flüssigkeit; und
- eine Waschkolonne G zur Abtrennung von Verunreinigungen aus der im Wesentlichen Wasserstoff enthaltenden Gasfraktion 6 des Abscheiders C mit flüssigem Stickstoff und Verwertung der Verunreinigungen als Brenngas 12.

Der Wärmeaustauscher A ist vorzugsweise ein Vielweg-PlattenWärmeaustauscher, in dem die Austauscherplatten im Allgemeinen aus Aluminium bestehen. Der Wärmeaustauscher A kann eine Vielzahl von Gas- und Flüssigkeitszuleitungen aufnehmen und sie auf vorgegebenen Temperaturen abkühlen oder erwärmen.

Das über den Wärmeaustauscher A in das erfindungsgemäße Anlagenteil eingeleitete Synthesegas 2 wird im Abscheider B in eine wasserstoffreiche Gasfraktion 4 und eine flüssige Phase 5 zerlegt, die reich an Kohlenmonoxid und Methan ist. Diese Trennung wird bei einem Druck von etwa 78 bar und bei einer Temperatur von -171 ± 10°C durchgeführt. Die Gasfraktion 4 wird im Wärmeaustauscher A weiter abgekühlt und dann in den Abscheider C eingeleitet. Die Flüssigkeit 5 wird auf einen Druck von etwa 6 bar entspannt und in den Verdampfer E eingeleitet.

Der Entspannungsverdampfer C ist eine Vorrichtung, in der das wasserstoffreiche Gas 4, das aus dem Abscheider B zugeleitet wird, weiter aufgetrennt wird, und zwar einerseits in ein Gas (6), welches vorwiegend aus Wasserstoff besteht und in eine Flüssigkeit 7, welche vorwiegend aus Kohlenmonoxid besteht. Diese Trennung wird bei einem Druck von etwa 78 bar und bei einer Temperatur von -195 ± 10°C durchgeführt. Das Gas 6, welches noch mit Kohlenmonoxid ver-unreinigt ist, wird in den unteren Teil der Waschkolonne G eingespeist. Die Flüssigkeit 7 wird in zwei Ströme aufgespalten, einen für die weitere Reinigung und den anderen mit überschüssigen Kohlenmonoxid, das noch etwas Wasserstoff enthält. Es kann als Synthesegas zur Bildung von Produkten wie Methanol, die aus Kohlenmonoxid und Wasserstoff hergestellt werden, mitverwendet werden.

Das zur weiteren Reinigung vorgesehene Kohlenmonoxid 7 wird auf einen Druck von etwa 6 bar entspannt und in den Entspannungsverdampfer D eingeleitet.

Im Gefäß D wird durch Entspannungsverdampfung der im Kohlenmonoxid absorbierte Wasserstoff verdampft. Es kann dann nach Durchleiten durch den Wärmeaustauscher A als Brenngas 15 verwendet werden. Die Entspannungsverdampfung wird bei einem Druck von etwa 6 bar und einer Temperatur von -195 ± 10°C durchgeführt. Die dabei entstehende Flüssigkeit 8 wird in die Destillationskolonne F eingeleitet.

Die in dem Abscheider B gewonnene Flüssigkeit 5 wird in den Entspannungsverdampfer E geleitet und der im flüssigen Kohlenmonoxid absorbierte Wasserstoff verdampft und kann dann über den Wärmeaustauscher A abgeleitet und als Brenngas verwertet werden. Diese Flash-Verdampfung wird bei einem Druck von etwa 6 bar und einer Temperatur von -171 ± 10°C durchgeführt. Die im Gefäß E gewonnene Flüssigkeit 9 wird in die Destillationskolonne F eingeleitet.

Die Destillationskolonne 11 dient zur Herstellung von hochreinem Kohlenmonoxid mit einer Reinheit über 98 Volumenprozent. Die Destillationskolonne steht unter einem Druck von etwa 5 bar und weist im oberen Teil Temperaturen von etwa -175°C und im unteren Teil von etwa -155°C auf. In diese Kolonne ist eine Mischung von Kohlenmonoxid und Methan aus dem Entspannungsverdampfer E (9) und die im Wesentlichen aus Kohlenmonoxid bestehende Flüssigkeit aus dem Entspannungsverdampfer D eingeleitet worden. Die Destillation in dieser Kolonne F erfolgt durch Erhitzung mittels eines durch ein Synthesegas beliebiger Zusammensetzung durchströmten Wärmeaustauschers oder durch eine am Boden der Kolonne vorhandene Ableitung für die sich dort ansammelnde Flüssigkeit, welche nach Durchleitung durch den Wärmeaustauscher A in die Destillationskolonne zurückgeführt werden kann (nicht zeichnerisch dargestellt). Das sich in der Destillationskolonne oben abscheidende Gas ist fast vollständig reines Kohlenmonoxid und wird in den Wärmeaustauscher A zurückgeleitet. Es steht dann für Synthesen zur Verfügung, in denen hochreines Kohlenmonoxid benötigt wird.

Die sich am Boden der Destillationskolonne F abscheidende Flüssigkeit ist fast reines flüssiges Methan, das auf einem Druck von etwa 1,3 bar entspannt und nach Durchleitung durch den Wärmeaustauscher A als Brenngas zur Verfügung steht.

Die Waschkolonne G dient der Reinigung von Wasserstoff mit flüssigem Stickstoff und zur gleichzeitigen Herstellung einer Wasserstoff/Stickstoff-Mischung. Die Waschkolonne steht unter einem Druck von etwa 77 bar und einer Temperatur von -185 ± 10°C. Nahezu reiner gasförmiger Wasserstoff aus dem Entspannungsverdampfer C wird über die Leitung 6 in den unteren Teil der Waschkolonne eingeleitet. Flüssiger Stickstoff wird in die Waschkolonne eingeleitet, wodurch sich in der Waschkolonne G eine Mischung von Wasserstoff und Stickstoff bildet, die Restkonzentrationen von Kohlenmonoxid und Argon von weniger als 5 ppm bzw. 150 ppm aufweist. Das oben aus der Waschkolonne abgezogene Produkt kann dann mit weiteren gasförmigen Stickstoff vermischt und auf ein molares Verhältnis Wasserstoff/Stickstoff von etwa 3:1, im allgemeinen auf ein Molverhältnis von 2,995 eingestellt und über den Wärmeaustauscher A als Synthesegas für die Ammoniaksynthese zur Verfügung gestellt werden. Auf dem Boden der Waschkolonne G bildet sich eine Mischung aus flüssigem Kohlenmonoxid, Argon und Stickstoff, die auf einen Druck von 1,3 bar entspannt und über den Wärmeaustauscher A als Brenngas verwendet wird.

Der in der Waschkolonne verwendete flüssige Stickstoff mit einer Reinheit von 99,995% wird im Wärmeaustauscher A verflüssigt und als ein unter hohem Druck stehendes Stickstoffgas in die Waschkolonne G eingespeist. Dieser Strom von Stickstoff kann auch aus mehreren Stickstoffströmen bestehen, die bei unterschiedlichen Drucken in die Waschkolonne eingespeist werden. Die Mischung der verschiedenen Stickstoffströme kann dann auf den erforderlichen Verfahrensdruck gepumpt werden.

Aufgabe des flüssigen Stickstoffes ist es, die unter niedrigen Druck stehenden Flüssigkeitsströme auf dem Boden der Waschkolonne G abzukühlen.

Der erfindungsgemäße Anlagenteil ist eine zentrale Einheit in der Anlage zur Zerlegung von Synthesegas, die in der gleichzeitig eingereichten deutschen Patentanmeldung ... (L1P12)......beschrieben ist. Dort ist das Gesamtverfahren zur Zerlegung von Synthesegas beschrieben. Dabei wird zunächst das im Synthesegas enthaltene Kohlendioxyd abgeschieden. Das verbleibende Gasgemisch, das im Wesentlichen aus Kohlenmonoxid und Wasserstoff besteht, ist der Strom des Synthesegases 2, dessen Zerlegung mit dem erfindungsgemäßen Anlagenteil beschrieben worden ist.

### Literaturverzeichnis:

1. "Gas Production", Ullman's Encyclopedia of Industrial Chemistry, vol. A12, VCH Veriagsgesellschaft mbH (1989).

### Bezugszeichenliste:

- A: Wärmetauscher
- B: Abscheider
- C: Abscheider
- D: Entspannungsvorrichtung
- E: Entspannungsvorrichtung
- F: Destillations- oder Rektifikationsvorrichtung
- G: Stickstoff-Wäsche-Vorrichtung

- 1: Stickstoff unter erhöhtem Druck
- 2: Synthesegas
- 3: Flüssiger Stickstoff
- 4: Gasfraktion, bestehend aus Wasserstoff, Kohlenmonoxid und Spuren an Methan
- 5: Flüssigfraktion, bestehend aus Kohlenmonoxid, Methan und Wasserstoff
- 6: Gasfraktion, bestehend aus Wasserstoff und wenig Kohlenmonoxid
- 7.: Flüssigfraktion, bestehend aus Kohlenmonoxid, wenig Methan und Spuren an Wasserstoff
- 8: Flüssigfraktion, bestehend aus Kohlenmonoxid, wenig Methan und Spuren von Wasserstoff
- 9: Flüssigfraktion, bestehend aus Kohlenmonoxid und Methan
- 10: Flüssigfraktion, bestehend aus Methan und wenig Kohlenmonoxid
- 11: Flüssiger Stickstoff
- 12: Flüssigfraktion, bestehend aus Kohlenmonoxid, Stickstoff, Wasserstoff und wenig Spuren an Argon
- 13: Gasfraktion, bestehend aus Kohlenmonoxid, wenig Wasserstoff und wenig Methan
- 14: Gasfraktion, bestehend aus Kohlenmonoxid
- 15: Gasfraktion, bestehend aus Kohlenmonoxid, Stickstoff, Wasserstoff, Methan und Spuren an Argon
- 16: Gasfraktion, bestehend aus Wasserstoff und Stickstoff

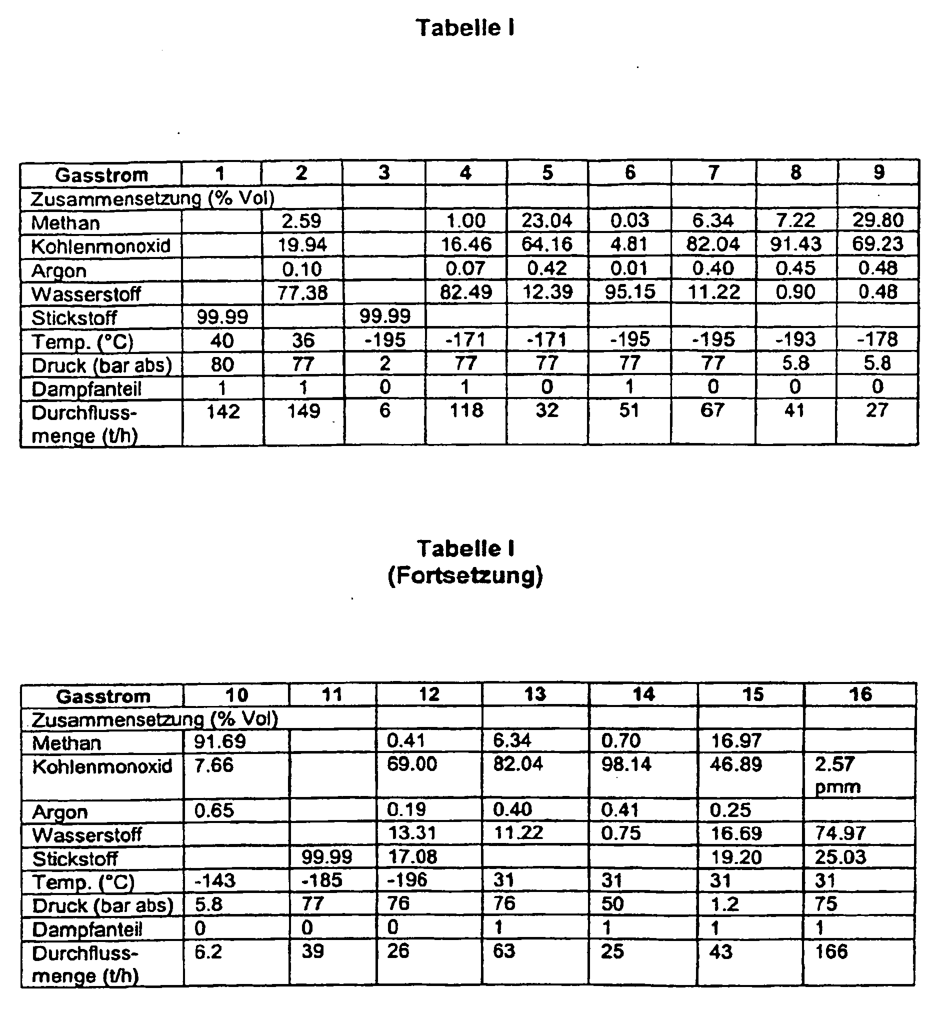

## Patentansprüche

1. Anlagenteil zur Zerlegung und Reinigung von Synthesegas bestehend aus einer Vorrichtung zur partiellen Kondensation von Synthesegas sowie eine Vorrichtung zur Stickstoffwäsche, die sich an die Vorrichtung zur partiellen Kondensation anschließt, **dadurch gekennzeichnet, dass** das Anlagenteil die folgenden miteinander verbundenen Vorrichtungen umfasst:
- einen Wärmeaustauscher A zur Abkühlung des dem Anlagenteil zugeführten Synthesegases;
- einen mit dem Wärmeaustauscher A verbundenen Abscheider B zur Auftrennung des Synthesegases 2 in eine Gasfraktion 4, bestehend im Wesentlichen aus Wasserstoff und Kohlenstoffmonoxid, und in eine Flüssigfraktion 5, bestehend im wesentlichen aus Kohlenstoffmonoxid und Methan;
- einen Verdampfer C zur weiteren Auftrennung der aus dem Abscheider B zugeleiteten Gasfraktion 4 in eine überwiegend aus Wasserstoff bestehende Gasfraktion 6 und eine überwiegend aus Kohlenstoffmonoxid bestehende Flüssigkeit 7;
- einen Verdampfer D, in dem der in der Flüssigkeit 7 absorbierte Wasserstoff verdampft und die verbleibende, im Wesentlichen Kohlenstoffmonoxid enthaltene Flüssigkeit 8 in eine Destillationskolonne F geleitet werden kann;
- einen weiteren Verdampfer E, in dem der in der Flüssigfraktion 5 des Abscheiders B noch absorbierte Wasserstoff durch Verdampfen entfernt und die im Wesentlichen Kohlenstoffmonoxid und Methan enthaltende Flüssigkeit 9 in die Destillationskolonne F geleitet werden kann;
- eine Destillationskolonne F zur Abtrennung von gasförmigem Kohlenstoffmonoxid und Gewinnung von Methan als sich am Boden der Kolonne abscheidende Flüssigkeit und
- einer Waschkolonne G zur Abtrennung von Verunreinigungen aus der im Wesentlichen Wasserstoff enthaltenden Gasfraktion 6 des Verdampfers C mit flüssigem Stickstoff und Verwertung der Verunreinigungen als Brenngas 12.

2. Anlagenteil nach dem Anspruch 1, **dadurch gekennzeichnet, dass** der Wärmeaustauscher A eine Vielzahl von Gas- und Flüssigkeitszuleitungen aufnehmen und sie auf vorgegebene Temperaturen abkühlen oder erwärmen kann.

3. Anlagenteil nach den Ansprüchen 1 und 2, **dadurch gekennzeichnet, dass** die Verdampfer C, D und E Entspannungsverdampfer sind, mit denen das in einer Flüssigkeit gelöste Gas entfernt werden kann.

4. Anlagenteil nach den Ansprüche 1 bis 3, **dadurch gekennzeichnet, dass** die Destillationskolonne F einen durch ein Synthesegas beliebiger Zusammensetzung durchströmten Wärmeaustauscher oder eine am Boden der Kolonne vorhandene Ableitung für die sich dort ansammelnde Flüssigkeit aufweist, welche nach Durchleitung durch den Wärmeaustauscher A in die Destillationskolonne zurückgeführt werden kann.

5. Anlagenteil nach den Ansprüchen 1 bis 4, **dadurch gekennzeichnet, dass** die Waschkolonne G Zuleitungen für gasförmigen und für flüssigen Stickstoff aufweist.

6. Verfahren zur Zerlegung und Reinigung von Synthesegas in dem Anlagenteil der Ansprüche 1 bis 5, bei dem zunächst eine partielle Kondensation des Synthesegases und dann eine Wäsche mit flüssigem Stickstoff durchgeführt wird, **dadurch gekennzeichnet, dass** im Abscheider B die Auftrennung des Synthesegases 2 in eine Gasfraktion 4, bestehend im Wesentlichen aus Wasserstoff und Kohlenstoffmonoxid, und eine Flüssigkeitsfraktion 5, bestehend im Wesentlichen aus Kohlenstoffmonoxid und Methan, bei einem Druck von ungefähr 78 bar und einer Temperatur von -171 ± 10°C durchgeführt wird.

7. Verfahren nach Anspruch 6, **dadurch gekennzeichnet, dass** im Verdampfer C die Auftrennung der Gasfraktion 4 in eine überwiegend aus Wasserstoff bestehende Gasfraktion 6 und eine überwiegend aus Kohlenstoffmonoxid bestehende Flüssigkeit 7 bei einem Druck von ungefähr 78 bar und einer Temperatur von -195 ± 10°C durchgeführt wird.

8. Verfahren nach den Ansprüchen 6 und 7, **dadurch gekennzeichnet, dass** im Verdampfer D der in der Flüssigkeit 7 adsorbierte Wasserstoff bei einem Druck von 6 bar und bei einer Temperatur von -195 ± 10°C verdampft wird.

9. Verfahren nach den Ansprüchen 6 bis 8, **dadurch gekennzeichnet, dass** im Verdampfer E der in der Flüssigkeit 5 adsorbierte Wasserstoff bei einem Druck von 6 bar und bei einer Temperatur von -171 ± 10°C verdampft wird.

10. Verfahren nach den Ansprüchen 6 bis 9, **dadurch gekennzeichnet, dass** in der Destillationskolonne F zur Abtrennung des Kohlenstoffmonoxids bei einem Druck von etwa 5 bar und einer Temperatur am Kolonnenkopf von etwa-175°C und einer Temperatur am Kolonnenboden von etwa -155°C gearbeitet wird.

11. Verfahren nach den Ansprüchen 6 bis 10, **dadurch gekennzeichnet, dass** in der Waschkolonne G zur Abtrennung von Verunreinigungen aus der im Wesentlichen Wasserstoff enthaltenden Gasfraktion 6 mit flüssigem Stickstoff bei einem Druck von etwa 77 bar und einer Temperatur von -185 ± 10°C gearbeitet wird.

12. Verfahren nach den Ansprüchen 6 bis 11, **dadurch gekennzeichnet, dass** das aus dem oberen Teil der Waschkolonne abgeleitete Gasgemisch durch Zuleitung von gasförmigem Stickstoff auf ein Molverhältnis von H₂/N₂ von etwa 3:1 eingestellt wird.

## Claims

1. Plant section for fractionating and purifying synthesis gas consisting of a device for the partial condensation of synthesis gas and a device for the nitrogen wash process, which is joined to the device for the partial condensation, **characterized in that** said plant section comprises the following devices, which are connected with one another:
- a heat exchanger A for cooling the synthesis gas fed to the plant section;
- a separator B connected with heat exchanger A for separating synthesis gas 2 into a gas fraction 4 essentially consisting of hydrogen and carbon monoxide and a liquid fraction 5 essentially consisting of carbon monoxide and methane;
- an evaporator C for further separating gas fraction 4 supplied from separator B into a gas fraction 6 predominantly consisting of hydrogen and a liquid 7 predominantly consisting of carbon monoxide;
- an evaporator D in which hydrogen absorbed in liquid 7 can be evaporated and the remaining liquid 8, which essentially comprises carbon monoxide, can be supplied to a distillation column F;
- a further evaporator E in which hydrogen still absorbed in liquid fraction 5 of separator B can be removed by evaporation and liquid 9, which essentially comprises carbon monoxide and methane, can be supplied to distillation column F;
- a distillation column F for separating gaseous carbon monoxide and obtaining methane as a liquid depositing at the bottom of the column; and
- a wash column G for separating impurities from gas fraction 6 essentially comprising hydrogen of evaporator C with liquid nitrogen and utilizing the impurities as combustible gas 12.

2. Plant section according to claim 1, **characterized in that** heat exchanger A is capable of receiving a multiplicity of gas and liquid feeds and cooling or heating them to predetermined temperatures.

3. Plant section according to claims 1 and 2, **characterized in that** evaporators C, D and E are flash evaporators with the help of which the gas dissolved in a liquid can be removed.

4. Plant section according to claims 1 to 3, **characterized in that** distillation column F comprises a heat exchanger through which a synthesis gas of any composition flows or discharge piping located at the bottom of the column for the liquid accumulating there, which after being passed through heat exchanger A can be returned to the distillation column.

5. Plant section according to claims 1 to 4, **characterized in that** wash column G comprises feeds for gaseous and for liquid nitrogen.

6. Method for fractionating and purifying synthesis gas in the plant section of claims 1 to 5 in which first a partial condensation of the synthesis gas and then a wash process with liquid nitrogen is performed, **characterized in that** in separator B, the separation of synthesis gas 2 into a gas fraction 4 essentially consisting of hydrogen and carbon monoxide and a liquid fraction 5 essentially consisting of carbon monoxide and methane is performed at a pressure of approximately 78 bar and a temperature of - 171 ± 10 °C.

7. Method according to claim 6, **characterized in that** in evaporator C, the separation of gas fraction 4 into a gas fraction 6 predominantly consisting of hydrogen and a liquid 7 predominantly consisting of carbon monoxide is performed at a pressure of approximately 78 bar and a temperature of -195 ± 10 °C.

8. Method according to claims 6 and 7, **characterized in that** in evaporator D, hydrogen absorbed in liquid 7 is evaporated at a pressure of 6 bar and at a temperature of -195 ± 10 °C.

9. Method according to claims 6 to 8, **characterized in that** in evaporator E, hydrogen absorbed in liquid 5 is evaporated at a pressure of 6 bar and at a temperature of -171 ± 10 °C.

10. Method according to claims 6 to 9, **characterized in that** in distillation column F, to separate carbon monoxide it is operated at a pressure of about 5 bar and a temperature at the column head of about -175 °C and a temperature at the column tray of about -155 °C.

11. Method according to claims 6 to 10, **characterized in that** in wash column G, to separate impurities from gas fraction 6 essentially comprising hydrogen with liquid nitrogen it is operated at a pressure of about 77 bar and a temperature of -185 ± 10 °C.

12. Method according to claims 6 to 11, **characterized in that** the gas mixture withdrawn from the top of the wash column is adjusted to a molar ratio of H₂/N₂ of about 3:1 by supplying gaseous nitrogen.

## Revendications

1. Unité d'installation pour décomposer et purifier du gaz de synthèse constituée d'un dispositif de condensation partielle de gaz de synthèse ainsi que d'un dispositif de lavage d'azote, qui se raccorde au dispositif de condensation partielle, **caractérisée en ce que** l'unité d'installation comprend les dispositifs suivants reliés les uns aux autres :
- un échangeur thermique A pour refroidir le gaz de synthèse introduit dans l'unité d'installation ;
- un séparateur B relié à l'échangeur de chaleur A afin de séparer le gaz de synthèse 2 en une fraction de gaz 4, constituée essentiellement d'hydrogène et de monoxyde de carbone, et en une fraction de liquide 5, constituée essentiellement de monoxyde de carbone et de méthane ;
- un évaporateur C pour séparer davantage la fraction de gaz 4 introduite hors du séparateur B en une fraction de gaz 6 principalement constituée d'hydrogène et un liquide 7 principalement constitué de monoxyde de carbone ;
- un évaporateur D, dans lequel l'hydrogène absorbé dans le liquide 7 s'évapore et le liquide 8 restant, contenant essentiellement du monoxyde de carbone peut être guidé dans une colonne de distillation F ;
- un autre évaporateur E, dans lequel l'hydrogène encore absorbé dans la fraction de liquide 5 du séparateur B est éliminé par évaporation et le liquide 9 contenant essentiellement du monoxyde de carbone et du méthane peut être guidé dans la colonne de distillation F ;
- une colonne de distillation F pour séparer du monoxyde de carbone gazeux et extraire du méthane comme liquide se séparant à la base de la colonne et
- une colonne de lavage G pour séparer les impuretés d'une fraction de gaz 6 contenant essentiellement de l'hydrogène de l'évaporateur C avec de l'azote liquide et pour recycler les impuretés comme gaz combustible 12.

2. Unité d'installation selon la revendication 1, **caractérisée en ce que** l'échangeur de chaleur A peut renfermer une pluralité de conduites d'amenée de gaz et de liquide et peut les refroidir ou les réchauffer à des températures prescrites.

3. Unité d'installation selon les revendications 1 et 2, **caractérisée en ce que** les évaporateurs C,D et E sont des évaporateurs de détente, avec lesquels le gaz dissous dans un liquide peut être éliminé.

4. Unité d'installation selon les revendications 1 à 3, **caractérisé en ce que** la colonne de distillation F présente un échangeur de chaleur traversé par un gaz de synthèse d'une composition au choix ou une conduite d'évacuation présente à la base de la colonne destinée au liquide s'accumulant à cet endroit, lequel après un passage à travers l'échangeur de chaleur A peut être réintroduit dans la colonne de distillation.

5. Unité d'installation selon les revendications 1 à 4, **caractérisé en ce que** la colonne de lavage G présente des conduites d'amenée d'azote gazeux et liquide.

6. Procédé de décomposition et purification de gaz de synthèse dans l'unité d'installation des revendications 1 à 5, dans lequel tout d'abord une condensation partielle du gaz de synthèse et ensuite un lavage avec de l'azote liquide sont effectués, **caractérisé en ce que** dans le séparateur B la séparation du gaz de synthèse 2 en une fraction de gaz 4, constituée essentiellement d'hydrogène et de monoxyde de carbone, et en une fraction de liquide 5, constituée essentiellement de monoxyde de carbone et de méthane, est effectuée à une pression d'environ 78 bar et une température de - 171 ± 10°C.

7. Procédé selon la revendication 6, **caractérisé en ce que** dans l'évaporateur C la séparation de la fraction de gaz 4 en une fraction de gaz 6 principalement constituée d'hydrogène et un liquide 7 principalement constitué de monoxyde de carbone est effectuée à une pression d'environ 78 bar et une température de - 195 ± 10°C.

8. Procédé selon les revendications 6 et 7, **caractérisé en ce que** l'hydrogène absorbé dans le liquide 7 dans l'évaporateur D est évaporé à une pression de 6 bar et à une température de - 195 ± 10 °C.

9. Procédé selon les revendications 6 à 8, **caractérisé en ce que** l'hydrogène absorbé dans le liquide dans l'évaporateur E est évaporé à une pression de 6 bar et à une température de - 171 ± 10 °C.

10. Procédé selon la revendications 6 à 9, **caractérisé en ce que** dans la colonne de distillation F, on travaille à des fins de séparation du monoxyde de carbone à une pression d'environ 5 bar et une température à la tête de colonne d'environ - 175 °C et une température à la base de colonne d'environ - 155°C.

11. Procédé selon les revendications 6 à 10, **caractérisé en ce que** dans la colonne de lavage, on travaille à des fins de séparation des impuretés hors de la fraction de gaz 6 contenant essentiellement de l'hydrogène avec de l'azote liquide à une pression d'environ 77 bar et une température de - 185 ± 10 °C.

12. Procédé selon les revendications 6 à 11, **caractérisé en ce que** le mélange gazeux rejeté de la partie supérieure de la colonne de lavage est réglé par introduction d'azote gazeux à un rapport molaire de H₂/N₂ d'environ 3 :1.
